# EUROPÄISCHE PATENTSCHRIFT

(11) **EP 3 971 064 B1**
(45) Veröffentlichungstag und Bekanntmachung des Hinweises auf die Patenterteilung: **27.12.2023**
(21) Anmeldenummer: 21193281.9
(22) Anmeldetag: 26.08.2021
(51) Int. Cl.: B62D 15/02

(54) **ERMITTELN EINES LENKREFERENZZUSTANDS MITTELS RADGESCHWINDIGKEITSGRÖSSEN**
DETERMINING A STEERING REFERENCE STATE BY MEANS OF WHEEL SPEED VARIABLES
DÉTERMINATION D'UN ÉTAT DE RÉFÉRENCE DE DIRECTION AU MOYEN DE GRANDEURS DE VITESSE DE ROUE

(30) Priorität: 21.09.2020 DE 102020211769
(43) Veröffentlichungstag der Anmeldung: 23.03.2022
(73) Patentinhaber: VOLKSWAGEN AG, 38440 Wolfsburg (DE)
(72) Erfinder: Makkus, Björn, 38108 Braunschweig (DE); Liesner, Henrik, 38104 Braunschweig (DE)

(56) Entgegenhaltungen:
- DE-A1- 19 830 561
- DE-A1-102017 122 945
- JP-A- H0 424 168
- KR-A- 20130 139 108
- US-A1- 2004 046 346

## Beschreibung

Die Erfindung betrifft ein Steuergerät und ein Verfahren zum Ermitteln eines Lenkreferenzzustandes, wobei der Lenkreferenzzustand einer Geradeausfahrt entspricht. Die Erfindung richtet sich insbesondere auf das Gebiet von Fahrzeugen und ferner insbesondere auf Kraftfahrzeuge, wie z.B. Personenkraftwagen oder Lastkraftwagen. Entsprechend kann der Lenkreferenzzustand (oder auch Lenkungsreferenzzustand) einen Referenzzustand eines Lenksystems und/oder Lenkgetriebes des Fahrzeugs betreffen.

Für Fahrzeuge und insbesondere darin verbaute Lenksysteme ist es relevant, bestimmte Lenkreferenzzustände möglichst genau zu ermitteln. Ein Beispiel eines solchen Lenkreferenzzustandes ist eine Geradeausfahrt. In diesem Zustand entspricht ein Lenkwinkel des Lenkgetriebes 0° und sind die Räder weder nach links noch nach rechts ausgelenkt. Beispielsweise ist die genaue Ermittlung des Referenzzustandes relevant, um Kenntnis darüber zu erlangen, inwiefern sich eine aktuelle Auslenkung des Lenksystems tatsächlich in einem von der Geradeausfahrt abweichenden Lenkwinkel niederschlägt. Genauer gesagt bietet die Ermittlung dieses Referenzzustandes die Möglichkeit, eine Winkeldifferenz bzw. Relativauslenkung aus diesem Referenzzustand als tatsächlich eingestellten Lenkwinkel zu ermitteln.

Ein Lenkreferenzzustand, der einer Geradeausfahrt entspricht, kann auch als eine Nullstellung des Lenksystems bezeichnet werden. Ursächlich für das Erfordernis diese Nullstellung (oder auch Neutralstellung) zu ermitteln ist, dass Lenksysteme meist nicht derart präzise und insbesondere nicht derart symmetrisch einbaubar sind, dass eine Soll-Nullstellung präzise umsetzbar ist. Stattdessen stellt sich eine Ist-Nullstellung aufgrund von Bauteil- und Montagetoleranzen meist in einem gewissen Winkelabstand zu der Soll-Nullstellung ein. Dieser Winkelabstand kann auch als Offset-Winkel bezeichnet werden. Er kann die Abweichung der tatsächlichen Nullstellung am Fahrzeug von der Soll-Nullstellung eines idealen und insbesondere ideal symmetrischen Lenksystems beziffern.

Es ist bekannt, die Nullstellung eines Lenksystems anhand einer ermittelten Gierrate zu bestimmen. Die EP 2 243 686 B1 offenbart in diesem Zusammenhang eine Lösung, bei der Temperatureinflüsse auf einen Gierratensensor kompensiert werden können. Wird eine Gierrate von im Wesentlichen null ermittelt, kann davon ausgegangen werden, dass ein Geradeausfahrt-Referenzzustand vorliegt und kann der dann vorliegende (z.B. sensorisch erfasste) Lenkwinkel ermittelt werden.

Weiterer technologischer Hintergrund findet sich in der EP 2 627 550 B1 und der US 2017/0210185 A1.

In der gattungsgemäßen DE 10 2017 122 945 A1 wird ein elektrisches Servolenkungssystem (EPS-System) zum Berechnen eines Lenkradwinkels auf der Grundlage von Radgeschwindigkeiten offenbart, wobei das EPS-System umfasst: ein Lenkradwinkelmodul, das ausgestaltet ist, um: eine erste Radgeschwindigkeit für ein erstes Rad zu empfangen; ein zweite Radgeschwindigkeit für ein zweites Rad zu empfangen; und den Lenkradwinkel auf der Grundlage der ersten Radgeschwindigkeit, der zweiten Radgeschwindigkeit, eines ersten Kalibrierungsfaktors und eines zweiten Kalibrierungsfaktors zu bestimmen.

Es hat sich gezeigt, dass sich mit den vorstehenden Lösungen der gewünschte Lenkreferenzzustand nicht immer ausreichend genau bestimmen lässt.

Eine Aufgabe der Erfindung besteht somit darin, eine alternative Möglichkeit zum Ermitteln der Geradeausfahrt eines Fahrzeugs bereitzustellen, die sich insbesondere durch eine hohe Genauigkeit bei begrenztem messtechnischen Aufwand auszeichnet.

Diese Aufgabe wird durch die Gegenstände der beigefügten unabhängigen Ansprüche gelöst. Vorteilhafte Weiterbildungen sind in den abhängigen Ansprüchen definiert. Sämtliche der vorstehenden Erläuterungen und Definitionen können auch auf die vorliegende Lösung zutreffen, sofern nicht anders angegeben oder ersichtlich.

Die Erfindung schlägt allgemein vor, Radgeschwindigkeitsgrößen von Fahrzeugrädern miteinander zu vergleichen, um eine Geradeausfahrt zu erkennen. Wurde die Geradeausfahrt erkannt, kann prinzipiell gemäß sämtlichen bekannten Ansätzen aus dem Stand der Technik vorgegangen werden. Die Erfindung schlägt aber insbesondere vor, einen dann von einem Lenkwinkelmesssystem des Fahrzeugs festgestellten Lenkwinkel als Nullstellung zu definieren und/oder die Differenz zwischen diesem Winkel und einem bisher als Nullstellung angenommenen Winkel als einen Offset-Winkelwert zu speichern. Die auf diese Weise ermittelte Nullstellung (bzw. der Offset-Winkelwert) kann verwendet werden, um beispielsweise tatsächlich vorliegende bzw. eingestellte Lenkwinkel relativ zu der entsprechenden Nullstellung zu bestimmen.

Insbesondere schlägt die Erfindung ein Verfahren zum Ermitteln eines Lenkreferenzzustands eines Fahrzeugs vor (wie z.B. eines Kraftfahrzeugs und insbesondere eines Personenkraftwagens oder Lastkraftwagens), mit:
- Erhalten einer ersten Radgeschwindigkeitsgröße, welche eine Radgeschwindigkeitsgröße von einem Rad des Fahrzeugs ist;
- Erhalten einer zweiten Radgeschwindigkeitsgröße, welche eine Radgeschwindigkeitsgröße von wenigstens einem weiteren Rad des Fahrzeugs ist;
- Ermitteln, ob ein Lenkreferenzzustand vorliegt, der einer Geradeausfahrt des Fahrzeugs entspricht, auf Basis der ersten und zweiten Radgeschwindigkeitsgröße.

Die beiden Räder können jeweils an einer gemeinsamen Fahrzeugachse angeordnet sein, insbesondere an einer auslenkbaren Fahrzeugachse. Bevorzugt handelt es sich hierbei um die Vorderachse des Fahrzeugs. Weiter sind die Räder vorzugsweise an unterschiedlichen Fahrzeugseiten angeordnet. Insbesondere kann es sich um ein kurveninneres und ein kurvenäußeres Rad handeln bzw. um Räder, die bei einer Kurvenfahrt ein entsprechendes kurveninneres und kurvenäußeres Rad bilden können.

Die Radgeschwindigkeitsgröße kann insbesondere eine Raddrehzahl sein. Allgemein kann die Radgeschwindigkeitsgröße von Raddrehzahlsensoren oder allgemein Radgeschwindigkeitssensoren erzeugt werden. Sie kann an ein Steuergerät der hierin geschilderten Art übermittelt werden. Die Radgeschwindigkeitssensoren können auf bekannten Sensorprinzipien beruhen und beispielsweise ein gemeinsam mit dem Rad rotierendes Element sensorisch erfassen (beispielsweise eine Zahnscheibe oder eine am Umfang profilierte Scheibe, deren Höhen- bzw. Umfangsprofil mit einem Abstandssensor erfasst wird). Vorteilhaft ist eine solche sensorbasierte Ermittlung der Radgeschwindigkeitsgrößen dahingehend, als dass auf im Fahrzeug ohnehin vorhandene Radgeschwindigkeitssensoren zurückgegriffen werden kann. Insbesondere kann es sich hierbei um Radgeschwindigkeitssensoren handeln, die auch für Funktionen eines ESC-Systems (Electronic Stability Control) oder aber ABS-Systems (Antiblockiersystem) verwendet werden.

Zum Ermitteln, ob der Lenkreferenzzustand vorliegt, können die erste und zweite Radgeschwindigkeitsgröße miteinander verglichen werden.

Insbesondere sieht eine Weiterbildung vor, dass das Vorliegen des Lenkreferenzzustands dann ermittelt wird, wenn eine Differenz zwischen der ersten und zweiten Radgeschwindigkeitsgröße unterhalb eines vorbestimmten Schwellenwertes liegt. Letzterer kann derart gewählt sein, dass eine Abweichung der ersten und weiteren Radgeschwindigkeitsgröße beispielsweise nicht mehr als 1 % betragen darf, um das Vorliegen des Lenkreferenzzustands zu erkennen.

Eine entsprechende Schwellenwertüberschreitung oder auch Abweichungsermittlung ist steuerungstechnisch aufwandsarm umsetzbar und ermöglicht das Ermitteln des Lenkreferenzzustandes mit geringen Latenzen.

Gemäß einer weiteren Ausführungsform wird bei Vorliegen des Referenzzustands ein Winkelkorrekturwert (oder auch Offset-Wert der bereits geschilderten Art) auf Basis eines aktuellen Lenkwinkels bestimmt. Insbesondere kann der aktuelle Lenkwinkel, der von einem Lenkwinkelmesssystem des Fahrzeugs gemessen werden kann, ermittelt werden. Dieser kann mit einem vorab hinterlegten Bezugslenkwinkel, der beispielsweise einem erwarteten oder auch Soll-Nullstellungs-Lenkwinkel entspricht, verglichen werden. Insbesondere kann die Differenz hierzwischen gebildet und als Winkelkorrekturwert bestimmt werden. Letzter kann abgespeichert werden. Er kann zukünftigen Bestimmungen eines an den Fahrzeugrädern eingestellten Ist-Lenkwinkels oder allgemein eines tatsächlich umgesetzten Ist-Lenkwinkels des Lenksystems zugrunde gelegt werden. Beispielsweise kann ein vom Lenkwinkelmesssystem gemessener aktueller Lenkwinkel mit dem Winkelkorrekturwert verrechnet werden. Insbesondere kann der (vorzeichenbehaftete) Winkelkorrekturwert zu diesem aktuellen Lenkwinkel addiert werden, um einen relativ zur ermittelten Nullstellung bzw. zum ermittelten Lenkreferenzzustand eingestellten (Ist-)Lenkwinkel zu bestimmen.

Zusätzlich oder alternativ kann vorgesehen sein, bei Vorliegen des Lenkreferenzzustandes den aktuellen Lenkwinkel als einen Referenzlenkwinkel zu speichern. Der Referenzlenkwinkel kann einer Nullstellung des Lenksystems entsprechen und/oder eine solche Nullstellung definieren.

Um die Aussagekraft und Genauigkeit des Ermittlungsergebnisses zu erhöhen, ist erfindungsgemäß vorgesehen, das Vorliegen des Lenkreferenzzustandes auf Basis wenigstens einer Zustandsgröße (die verschieden von den Radgeschwindigkeitsgrößen ist) des Fahrzeugs zu plausibilisieren. Diese weitere Zustandsgröße ist erfindungsgemäß die Gierrate. Diese Größe ist meist bekannt bzw. wird durch im Fahrzeug standardmäßig verbaute Sensoren erfasst. Auf diese Weise kann die Plausibilisierung aufwandsarm und kostengünstig erfolgen.

Prinzipiell kann vorgesehen sein, dass das Verfahren von einem Steuergerät der nachstehend geschilderten Art ausgeführt wird, wobei dieses Steuergerät insbesondere ein ESC-Steuergerät (Elektronic Stability Control) sein kann. Entsprechend können die Radgeschwindigkeitsgrößen von dem ESC-Steuergerät erhalten werden, welches dazu eingerichtet ist, das Vorliegen des Lenkreferenzzustandes (darauf basierend) zu ermitteln. Wie erwähnt, können die erste und zweite Radgeschwindigkeitsgröße jeweils eine Raddrehzahl eines zugeordneten Rads angeben bzw. eine solche Raddrehzahl sein.

Die Erfindung betrifft auch ein Steuergerät, das dazu eingerichtet ist, ein Verfahren gemäß jeglichem hierin geschilderten Aspekt auszuführen. Das Steuergerät kann digital und/oder elektronisch betreibbar sein. Es kann wenigstens eine Prozessoreinrichtung und/oder wenigstens eine Speichereinrichtung umfassen. Auf der Speichereinrichtung können Programmanweisungen hinterlegt sein, die das Steuergerät beim Ausführen durch die Prozessoreinrichtung dazu veranlassen, jegliche hierin geschilderten Verfahrensmaßnahmen auszuführen. Insbesondere kann das Steuergerät an einen Kommunikationsbus (insbesondere einen CAN-Bus) angeschlossen sein. Hierüber kann es mit den geschilderten Radgeschwindigkeitssensoren kommunizieren und insbesondere von diesen die Radgeschwindigkeitsgrößen erhalten. Die Prozessoreinrichtung des Steuergeräts kann dazu eingerichtet sein, diese Radgeschwindigkeitsgrößen in jeglicher hierin geschilderten Weise auszuwerten und insbesondere darauf basierend einen Winkelkorrekturwert und/oder Referenzlenkwinkel der vorstehend geschilderten Art zu ermitteln. Das Steuergerät kann (beispielsweise über den Kommunikationsbus) auch mit einem geschilderten Lenkwinkelmesssystem eines Lenksystems verbunden sein. Wie erwähnt, kann es sich bei dem Steuergerät um ein ESC-Steuergerät des Fahrzeugs handeln. Dieses verfügt meist bereits über die geschilderten Verbindungen zu den Sensoren bzw. Messsystemen, sodass dieses aufwandsarm zum Ausführen eines hierin offenbarten Verfahrens weitergebildet werden kann.

Ausführungsbeispiele der Erfindung werden im Folgenden anhand der beigefügten schematischen Figuren erläutert:
- Fig. 1: zeigt ein Fahrzeug mit einem Steuergerät gemäß einem ersten Ausführungsbeispiel der Erfindung.
- Fig. 2: zeigt ein Ablaufschema eines Verfahrens, das von dem Steuergerät aus Fig. 1 ausgeführt wird.

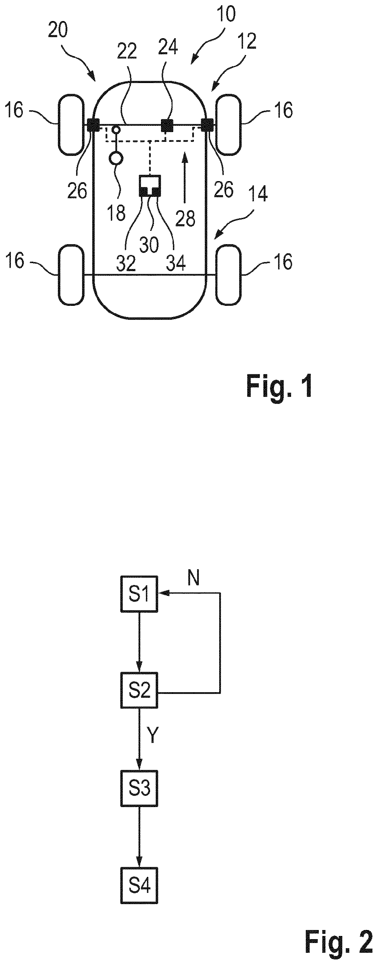

In Fig. 1 ist ein Fahrzeug 10 in einer vereinfachten schematischen Draufsicht gezeigt. Man erkennt eine Vorderachse 12 und eine Hinterachse 14. An den Achsen 12, 14 sind jeweils zwei Räder 16 angeordnet. Diese Räder 16 befinden sich je Achse 12, 14 an unterschiedlichen Fahrzeugseiten bzw. an voneinander entfernten Enden der jeweiligen Achsen 12, 14. Gezeigt ist auch eine Lenkhandhabe 18 in Form eines Lenkrads. Dieses ist Bestandteil eines Lenksystems 20. Das Lenksystem 20 umfasst ein schematisch stark vereinfachtes Lenkgetriebe 22. Dieses kann gemäß herkömmlichen Lösungen des Standes der Technik ausgebildet sein und beispielsweise eine Zahnstange umfassen (nicht gesondert dargestellt). Mit einem Lenkwinkelmesssystem 24 kann ein aktuell eingestellter Lenkwinkel des Lenksystems 20 ermittelt werden. In an sich bekannter Weise kann dies beispielsweise durch Ermittlung einer Zahnstangenposition erfolgen.

Gezeigt sind auch Raddrehzahlsensoren 26 an jedem der Räder 16 der Vorderachse 12. Im gezeigten Beispiel ist lediglich die Vorderachse 12 auslenkbar, nicht aber die Hinterachse 14.

Die Raddrehzahlsensoren 26 ermitteln als Radgeschwindigkeitsgröße eines jeweils zugeordneten Rades 16 die Raddrehzahl. Die Raddrehzahlsensoren 26 sind, wie auch das Lenkwinkelmesssystem 24, an einen Kommunikationsbus 28 angeschlossen. An diesen ist auch ein Steuergerät 30 angeschlossen, das im vorliegenden Beispiel ein ESC-Steuergerät ist.

Das ESC-Steuergerät erhält über den Kommunikationsbus 28 die Raddrehzahlen der beiden Raddrehzahlsensoren 26 und bevorzugt auch einen aktuell vom Lenkwinkelmesssystem 24 gemessenen Lenkwinkel.

Das Steuergerät 30 umfasst eine Prozessoreinrichtung 32 und eine Speichereinrichtung 34. In der Speichereinrichtung 34 können beispielsweise Informationen betreffend einen Ausgangs-, Referenz- oder Soll-Lenkwinkel hinterlegt sein, welcher einer vermuteten Geradeausfahrt des Fahrzeugs 10 entspricht. Aufgrund der vorstehend geschilderten Asymmetrie des Lenksystems 20 oder aber im Betrieb auftretender Störungen (beispielsweise Verschleiß oder Deformationen einzelner Glieder des Lenkgetriebes 22) kann der erwähnte Soll-Lenkwinkel nicht einer tatsächlichen Geradeausfahrt des Fahrzeugs 10 entsprechen.

Vorliegend soll daher der Lenkwinkel (Referenzlenkwinkel) ermittelt werden, bei dem eine Geradeausfahrt vorliegt. Hierzu vergleicht die Steuereinrichtung 30 die von den Raddrehzahlsensoren 26 erhaltenen Raddrehzahlen. Weichen diese nicht über ein vorbestimmtes Maß voneinander ab (d.h. liegt deren Differenz unterhalb eines vorbestimmten Schwellenwerts), kann auf eine Geradeausfahrt geschlossen werden.

Hierbei können zusätzliche Bedingungen berücksichtigt werden, wie z.B. eine Übereinstimmung über einen möglichst langen Zeitraum oder aber eine Mindesthäufigkeit einer entsprechend festgestellten Übereinstimmung.

Auch kann zusätzlich oder alternativ eine Plausibilisierung der vorstehend geschilderten Art vorgesehen sein. Die Plausibilisierung kann zusätzlich oder alternativ zu der Berücksichtigung einer Gierrate vorsehen, dass die Häufigkeit der entsprechend festgestellten Übereinstimmung der Raddrehzahlen einen gewissen Mindestwert erreichen soll (insbesondere die absolute Häufigkeit) oder aber im Vergleich zu anderen Fahrzuständen, bei denen keine entsprechende Übereinstimmung vorliegt, ein bestimmtes Relativverhältnis aufweisen soll (entspricht einer Relativhäufigkeit, des bevorzugt öfter auftretenden Zustandes der Übereinstimmung der Raddrehzahlen gegenüber einer deutlichen Abweichung hiervon).

Dem liegt der Gedanke zugrunde, dass die Räder 16 der Vorderachse 12 bei Kurvenfahrten ein kurveninneres und kurvenäußeres Rad bilden. Entsprechend weichen die Raddrehzahlen bei Kurvenfahrten (d.h. bei nicht-Geradeausfahrten und/oder einem aktiven Auslenken) voneinander ab. Bei einer Geradeausfahrt werden diese Raddrehzahlen jedoch im Wesentlichen übereinstimmen. Die Plausibilisierung anhand der vorstehend geschilderten Häufigkeit geht davon aus, dass Geradeausfahrten im Vergleich zu Kurvenfahrten häufiger auftreten.

Wurde eine Übereinstimmung der Raddrehzahlen von der Steuereinrichtung 30 bzw. deren Prozessoreinrichtung 32 ermittelt und wurde optional eines der vorstehend geschilderten Plausibilitätskriterien erfüllt, kann der aktuelle vom Lenkwinkelmesssystem 24 ermittelte Lenkwinkel als Referenzlenkwinkel in der Speichereinrichtung 34 gespeichert werden. Dieser entspricht einer Nullstellung des Lenksystems 20. Alternativ oder zusätzlich kann der vorstehend geschilderte Winkelkorrekturwert als ein Offset-Wert ermittelt und gespeichert werden.

In Fig. 2 ist das vorstehend geschilderte Verfahren noch einmal als ein Ablaufschema dargestellt. In einem Schritt S1 werden von den Raddrehzahlsensoren 26 Raddrehzahlen ermittelt und an das Steuergerät 30 ausgegeben. Dieses vergleicht in einem Schritt S2 daraufhin die Raddrehzahlen miteinander. Wird hierbei keine ausreichende Übereinstimmung festgestellt (Pfeil N in Fig. 2), wird zum Schritt S1 zurückgekehrt. Ist die Übereinstimmung hingegen ausreichend (Pfeil Y in Fig. 2), wird im Schritt S3 der aktuell vom Lenkwinkelmesssystem 24 gemessene Lenkwinkel einer Geradeausfahrt gleichgesetzt. Insbesondere wird darauf basierend der geschilderte Winkelkorrekturwert gespeichert.

In einem Schritt S4 misst das Lenkwinkelmesssystem 24 im weiteren Betrieb des Fahrzeugs 10 einen weiteren Lenkwinkel. Dieser wird mit dem Winkelkorrekturwert verrechnet, um einen tatsächlich wirksam eingestellten bzw. gegenüber der tatsächlichen Geradeausfahrt ausgelenkten Lenkwinkel zu erhalten.

### Bezugszeichenliste

- 10: Fahrzeug
- 12: Vorderachse
- 14: Hinterachse
- 16: Rad
- 18: Lenkhandhabe
- 20: Lenksystem
- 22: Lenkgetriebe
- 24: Lenkwinkelmesssystem
- 26: Raddrehzahlsensor
- 28: Kommunikationsbus
- 30: Steuergerät
- 32: Prozessoreinrichtung
- 34: Speichereinrichtung

## Patentansprüche

1. Verfahren zum Ermitteln eines Lenkreferenzzustands eines Fahrzeugs (10), mit:
- Erhalten einer ersten Radgeschwindigkeitsgröße, die eine Radgeschwindigkeitsgröße von einem Rad (16) des Fahrzeugs (10) ist;
- Erhalten wenigstens einer zweiten Radgeschwindigkeitsgröße, die eine Radgeschwindigkeitsgröße von einem weiteren Rad (16) des Fahrzeugs (10) ist;
- Ermitteln, ob ein Lenkreferenzzustand vorliegt, der einer Geradeausfahrt des Fahrzeugs (10) entspricht, auf Basis der ersten und zweiten Radgeschwindigkeitsgröße,
**gekennzeichnet dadurch, dass** das Vorliegen des Lenkreferenzzustands auf Basis wenigstens einer Zustandsgröße des Fahrzeugs (10) plausibilisiert wird, wobei die Zustandsgröße die Gierrate ist.

2. Verfahren nach Anspruch 1,
**dadurch gekennzeichnet, dass** das Vorliegen des Lenkreferenzzustands dann ermittelt wird, wenn eine Differenz zwischen der ersten und zweiten Radgeschwindigkeitsgröße unterhalb eines vorbestimmten Schwellenwerts liegt.

3. Verfahren nach Anspruch 1 oder 2,
**dadurch gekennzeichnet, dass** bei Vorliegen des Lenkreferenzzustands ein Winkelkorrekturwert auf Basis eines aktuellen Lenkwinkels bestimmt wird.

4. Verfahren nach einem der vorangehenden Ansprüche,
**dadurch gekennzeichnet, dass** bei Vorliegen des Lenkreferenzzustands der aktuelle Lenkwinkel als ein Referenzlenkwinkel gespeichert wird.

5. Verfahren nach einem der vorangehenden Ansprüche,
**dadurch gekennzeichnet, dass** die Radgeschwindigkeitsgrößen von einem ESC-Steuergerät (30) erhalten werden, welches eingerichtet ist, das Vorliegen des Lenkreferenzzustands zu ermitteln.

6. Verfahren nach einem der vorangehenden Ansprüche,
**dadurch gekennzeichnet, dass** die erste und zweite Radgeschwindigkeitsgröße jeweils eine Raddrehzahl eines zugeordneten Rads (16) angeben.

7. Steuergerät (30), das dazu eingerichtet ist, ein Verfahren nach einem der vorangehenden Ansprüche auszuführen.

## Claims

1. Method for determining a steering reference state of a vehicle (10), comprising:
- obtaining a first wheel speed variable, which is a wheel speed variable of a wheel (16) of the vehicle (10);
- obtaining at least one second wheel speed variable, which is a wheel speed variable of a further wheel (16) of the vehicle (10);
- determining whether a steering reference state is present which corresponds to travel straight ahead by the vehicle (10), on the basis of the first and second wheel speed variables,
**characterized in that** the presence of the steering reference state is plausibilized on the basis of at least one state variable of the vehicle (10), the state variable being the yaw rate.

2. Method according to Claim 1,
**characterized in that** the presence of the steering reference state is determined if a difference between the first and second wheel speed variables is below a predetermined threshold value.

3. Method according to Claim 1 or 2,
**characterized in that** in the event of the steering reference state being present, an angle correction value is ascertained on the basis of a current steering angle.

4. Method according to any of the preceding claims,
**characterized in that** in the event of the steering reference state being present, the current steering angle is stored as a reference steering angle.

5. Method according to any of the preceding claims,
**characterized in that** the wheel speed variables are obtained by an ESC control unit (30) configured to determine the presence of the steering reference state.

6. Method according to any of the preceding claims,
**characterized in that** the first and second wheel speed variables each indicate a wheel rotational speed of an assigned wheel (16).

7. Control unit (30) configured to carry out a method according to any of the preceding claims.

## Revendications

1. Procédé de détermination d'un état de référence de direction d'un véhicule (10), comprenant :
- l'obtention d'une première grandeur de vitesse de roue, qui est une grandeur de vitesse de roue d'une roue (16) du véhicule (10) ;
- l'obtention d'au moins une seconde grandeur de vitesse de roue, qui est une grandeur de vitesse de roue d'une autre roue (16) du véhicule (10) ;
- la détermination de la présence ou non d'un état de référence de direction qui correspond à une marche en ligne droite du véhicule (10), sur la base des première et seconde grandeurs de vitesse de roue,
**caractérisé en ce que** la plausibilité de la présence de l'état de référence de direction est déterminée sur la base d'au moins une grandeur d'état du véhicule (10), la grandeur d'état étant la vitesse de lacet.

2. Procédé selon la revendication 1,
**caractérisé en ce que** la présence de l'état de référence de direction est déterminée lorsqu'une différence entre les première et seconde grandeurs de vitesse de roue est inférieure à une valeur de seuil prédéterminée.

3. Procédé selon la revendication 1 ou 2,
**caractérisé en ce que**, en présence de l'état de référence de direction, une valeur de correction angulaire est déterminée sur la base d'un angle de direction actuel.

4. Procédé selon l'une des revendications précédentes,
**caractérisé en ce que**, en présence de l'état de référence de direction, l'angle de direction actuel est mémorisé en tant qu'angle de direction de référence.

5. Procédé selon l'une des revendications précédentes,
**caractérisé en ce que** les grandeurs de vitesse de roue sont obtenues en provenance d'une unité de commande ESC (30) qui est conçue pour déterminer la présence de l'état de référence de direction.

6. Procédé selon l'une des revendications précédentes,
**caractérisé en ce que** les première et seconde grandeurs de vitesse de roue indiquent chacune une vitesse de rotation de roue d'une roue associée (16).

7. Unité de commande (30) qui est conçue pour mettre en œuvre un procédé selon l'une des revendications précédentes.
